# EUROPÄISCHE PATENTSCHRIFT

(11) **EP 1 144 089 B1**
(45) Veröffentlichungstag und Bekanntmachung des Hinweises auf die Patenterteilung: **17.09.2003**
(21) Anmeldenummer: 99957336.3
(22) Anmeldetag: 03.12.1999
(51) Int. Cl.: B01D 53/22, B01D 71/02

(54) **KERAMISCHE FLACHMEMBRAN UND VERFAHREN ZU IHRER HERSTELLUNG**
CERAMIC FLAT MEMBRANE AND METHOD FOR PRODUCING THE SAME
MEMBRANE PLATE CERAMIQUE ET SON PROCEDE DE PRODUCTION

(30) Priorität: 14.12.1998 DE 19857590
(43) Veröffentlichungstag der Anmeldung: 17.10.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: ADLER, Jörg, D-01662 Meissen (DE); LENK, Reinhard, D-02779 Grossschönau (DE); RICHTER, Hans-Jürgen, D-01257 Dresden (DE); STOCKMANN, Regina, D-01189 Dresden (DE); TOCHA, Daniel, D-01097 Dresden (DE); STROH, Norbert, D-71106 Magstadt (DE); TUDYKA, Stefan, D-71642 Ludwigsburg (DE)
(74) Vertreter: Rauschenbach, Marion, Dipl.-Ing.
(86) Internationale Anmeldenummer: EP9909478
(87) Internationale Veröffentlichungsnummer: WO00035561

(56) Entgegenhaltungen:
- EP-A- 0 574 012
- JP-A- 58 030 306
- US-A- 3 785 781

## Beschreibung

Die Erfindung bezieht sich auf das Gebiet der Filter- und Separationstechnik und der Keramik und betrifft eine keramische Flachmembran beispielsweise in Form eines Multikanalelementes für den Einsatz in der Flüssigkeits- und Gasfiltration und ein Verfahren zu ihrer Herstellung. Derartige Multikanalelemente werden bevorzugt in Form von Filtermodulen, die aus mehreren Multikanalelementen bestehen, eingesetzt.

Keramische Membranen für Filtrationsanwendungen gibt es mit Flachgeometrie und Rohrgeometrie. Diese Membranen weisen dabei ein möglichst hohes Flächen- zu Volumenverhältnis auf. Bei Membranen in Rohrgeometrie sind sowohl Monokanalals auch Multikanalelemente möglich. Bei rohrförmigen Multikanalelementen (z.B. 7 oder 19 Kanäle) wird im Vergleich zu Monokanalelementen ein deutlich höheres Flächen- zu Volumenverhältnis erreicht. Durch Erhöhung der Kanalzahl auf z.B. 37 kann die nutzbare Filtrationsfläche weiter erhöht werden. Bei konstantem Außendurchmesser des Rohres ist jedoch die Zahl der Kanäle nicht beliebig erhöhbar, da sonst die Wandstärken zu gering werden und somit die mechanische Stabilität nicht mehr ausreichend gewährleistet ist. Daneben wird mit zunehmender Kanalzahl die Permeatabführung der inneren Kanäle durch die Keramik nach außen erschwert. Für Rohrgeometrien kann auch durch Änderung der üblicherweise konzentrischen Kanal-Querschnittsformen in Kleeblatt- oder Schmetterlingsform das Flächen- zu Volumenverhältnis erhöht werden.
Die herkömmlichen rohrförmigen Mono- und Multikanalelemente werden durch Extrusion in einem Stück hergestellt.
Eine neue Technik zur Herstellung von Monokanalelementen, die eine sehr geringe Rauhigkeit aufweisen und sich daher gut für die Membranbeschichtung eignen, stellt das Zentrifugieren dar (Nijmeijer, A. u.a. Am. Ceram. Soc. Bull. 77(4), S. 95-98, 1998).

Die eigentliche Trennmembran wird in einem nachfolgenden Schritt, z.B. durch einoder mehrmaliges Benetzen des Rohres mit einer Suspension mit keramischen Pulvern oder mit einer Precursorlösung aufgebracht. Unabhängig von der Chemie und Zusammensetzung des Precursors befindet sich die Trennmembran auf der Innenseite des Rohrkanals bzw. der Rohrkanäle.

Neben den Membranen in Rohrgeometrie gibt es Flachmembranen. Derartige Flachmembranen sind in WO98/28060 A1, DE 36 12 825 A1 und DE 196 24 176 C2 angegeben. Alle diese Flachmembranen sind durch eine planare Oberfläche gekennzeichnet. Außerdem müssen sie bei der Flüssigfiltration sehr dünn sein, um einen ausreichenden Filtratfluß zu gewährleisten. Durch die relativ geringe mechanische Stabilität dünner keramischer Membranen ist eine poröse Abstützung erforderlich, deren Dicke mehr als das Hundertfache der Dicke der Membranschicht beträgt.

DE 43 35 122 A1 beschreibt eine keramische Flachmembran, die aus zwei Membranflachfolien besteht, die durch eine stoffgleiche, aber absolut dichte Distanzhalterung in Wellenform voneinander getrennt werden. Die Seite der Membran, welche von dem zu trennenden Medium (Feed) angeströmt wird, besitzt eine ebene, d.h. nicht strukturierte Oberfläche. Dagegen ist in DE 43 29 473 C1 eine Flachmembran beschrieben, deren Geometrie so gestaltet ist, dass an keiner Stelle der Membran Zugspannungen auftreten. Zu diesem Zweck sind auf der Filtratseite Rillen enthalten, die annähernd den Querschnitt eines Halbkreisbogens haben.

In der WO 90/15661 wird eine selbsttragende Keramikmembran, die aus zwei Schichten, aus einem groben und einem feinen Pulver bestehen, beschrieben. Die Herstellung erfolgt durch das Übereinandergießen der Schichten mittels Foliengießtechnik. Der so erzeugt support-layer-Verbund wird in einem Schritt gebrannt. Angegeben wird auch, dass die Membran im Grünzustand flexibel ist und geprägt werden kann (z.B. Kanäle).

In der US 5766290 ist ein keramischer Filter aus speziell strukturierten Platten (Zickzackmuster) beschrieben, die versetzt aufeinander gestapelt und verklebt werden, wobei sich hier parallele Kanäle ergeben. Die Platten haben eine gleichförmige poröse Struktur und bestehen aus Bruchstücken von keramischen Fasern. Sie finden Anwendung als hochtemperatur- und druckstabiler Filter für Querstromfiltration von Gasen (Rauchgas, Erdgas).
Nachteilig ist die eingeschränkte geometrische Gestaltungsmöglichkeit und die gleichförmige poröse Struktur, die einer breiten Anwendung entgegensteht.

Die Nachteile der bisherigen Flachmembranen und auch der in Rohrgeometrien sind, dass sich die Membranflächen nicht beliebig erhöhen lassen und dass bei einer derartigen Erhöhung die mechanische Stabilität geringer wird.

Bekannte Membranen werden bekanntermaßen vorrangig aus Polymeren hergestellt. Keramische Membranen konnten sich aufgrund hoher Fertigungskosten trotz besserer Eigenschaften (höhere chemische, thermische und mechanische Festigkeit) bislang nicht durchsetzen.

Die bisherige Technologie zur Herstellung von keramischen Flachmembranen besteht aus folgenden Schritten:
1. Herstellung des Supportes
   - Mischen von eng fraktionierten Pulvern im Größenbereich einiger µm mit bekannten Formgebungshilfsmitteln,
   - Formgebung,
   - Sintern.
2. Herstellung einer Teilschicht auf dem Support
   - Suspensionsherstellung aus feinen, ebenfalls möglichst eng fraktionierten Pulvern mit Korngrößen, die kleiner sind als die des Supportes,
   - Beschichtung des Supportes durch Dipcoating,
   - Trocknen,
   - Sintern,
      mehrmalige Wiederholung der letzten drei Schritte
3. Herstellung einer weiteren Teilschicht auf der ersten Teilschicht
   - Suspensionsherstellung aus feinen, möglichst eng fraktionierten Pulvern mit Korngrößen, die kleiner sind als die der vorherig aufgebrachten Teilschicht, oder Solherstellung
   - Beschichten der ersten gesinterten Teilschicht durch Dipcoating,
   - Trocknen,
   - Sintern,
      mehrmalige Wiederholung der letzten drei Schritte
4. Fertigung der Module
   - Versiegeln der Endstücke (Abdichtung)
   - Montage

Aus dieser Darstellung ist ersichtlich, daß der hauptsächliche Nachteil des bekannten Herstellungsverfahrens die aufwendige Wiederholung der Aufbringung, Trocknung und Sinterung der Teilschichten ist. Diese Herstellungsteilschritte sind besonders kostenintensiv.

Es hat bereits Untersuchungen gegeben, dieses Herstellungsverfahren durch Integration der Beschichtung in den Formgebungsprozeß zu verbessern. Dies wurde speziell mit der Coextrusion versucht. Dabei werden strangförmigen Massen mit einem Kolbenextruder über einen Dorn extrudiert (DE 22 08 767 C1).
Die Untersuchungen sind aber nicht fortgesetzt und in der Praxis nicht angewandt worden. Die Herstellung von mehrschichtigen Elementen ist auf diese Art und Weise allerdings nicht möglich.

Die Aufgabe der Erfindung besteht darin, eine keramische Flachmembran anzugeben, bei der bei Beibehaltung der mechanischen Stabilität der Membranen eine Erhöhung der wirksamen Membranfläche und damit eine Verbesserung des Flächen- zu Volumenverhältnisses erreicht wird und diese Membranen durch ein kostengünstigeres Verfahren herstellbar sind.

Die Aufgabe wird durch die in den Ansprüchen angegebene Erfindung gelöst. Weiterbildungen sind Gegenstand der Unteransprüche.

Die erfindungsgemäße keramische Flachmembran ist aus mindestens zwei Schichten gleicher Dicke aufgebaut, wobei jede dieser Schichten aus wiederum mindestens zwei Teilschichten aufgebaut ist. Diese beiden Teilschichten können sich hinsichtlich der stofflichen Zusammensetzung und Struktur voneinander unterscheiden oder auch nicht. In jedem Fall unterscheiden sie sich hinsichtlich ihrer mittleren Porengröße. Vorteilhafterweise sind die grobporöseren Teilschichten in Richtung des Filtrates angeordnet.

Unter der mittleren Porengröße ist dabei die Größe zu verstehen, die alle mittleren Abmessungen (insbesondere Durchmesser, Radius, Querschnittsfläche, Volumen) der Poren und auch ihre mittlere Verteilung betrifft.

Die Teilschichten sind vorteilhafterweise miteinander verbunden. Die Schichten sind vorteilhafterweise miteinander verbunden.

Erfindungsgemäß weist mindestens eine der Schichten eine nicht planare Geometrie auf. Unter einer planaren Geometrie soll gemäß dieser Erfindung verstanden werden, daß die Oberflächen der Schichten eben oder im wesentlichen eben sind. Alle nicht ebenen oder im wesentlichen nicht ebenen Oberflächen von Schichten weisen somit eine nicht planare Geometrie auf. Durch die nicht planare Geometrie mindestens einer der Schichten entstehen in der erfindungsgemäßen keramischen Flachmembran Kanäle, die entweder das zu trennende Medium oder das Filtrat aufnehmen können.
Die Querschnitte dieser Kanäle weisen eine beliebige Geometrie auf und verändern sich auch über die Länge der Kanäle und auch über das Volumen der Flachmembran kontinuierlich oder diskontinuierlich.

Die erfindungsgemäßen Flachmembranen weisen ein Mehrfaches an Membranfläche gegenüber der bei bekannten Flachmembranen möglichen Membranflächen auf. Die Membranfläche kann sechsmal größer sein als bei einem Multikanalelement mit 19 Einzelkanälen, Es ist auch eine deutlich höhere mechanische Stabilität gegenüber herkömmlichen Flachmembranen erreicht.

Ein weiterer Vorteil ist, dass durch die spezielle Form der erfindungsgemäßen Flachmembran beim Überströmen des zu filternden Mediums Turbulenzen und Strudel erzeugt werden, so dass die Bildung einer Deckschicht aus Schmutz- und anderen Partikeln ("Fouling") stark eingeschränkt ist. Ebenfalls wird eine Ablösung einer solchen Schicht während der Filtration begünstigt.
Damit ist eine erhöhte Permeationsleistung und eine verlängerte Standzeit der Flachmembranen möglich.

Durch das erfindungsgemäße Verfahren wird die Herstellung der erfindungsgemäßen keramischen Flachmembranen möglich.

Es werden mindestens zwei Schichten hergestellt, die aus mindestens zwei Teilschichten aufgebaut sind. Diese Teilschichten werden beispielsweise als Folie gegossen, wobei erst die eine Teilschicht als Folie gegossen und ganz oder teilweise getrocknet wird und anschließend auf diese Folie die zweite Folie aus dem Material für die zweite Teilschicht gegossen und getrocknet wird. Der so entstandene Schichtverbund wird als eine Schicht beispielsweise mit einer planaren Geometrie belassen und als eine zweite Schicht mit einer längsorientierten Struktur geprägt.
Die beiden Teilschichten der beiden Schichten können gleiche oder unterschiedliche Zusammensetzung und/oder Struktur aufweisen. In jedem Fall haben sie aber eine unterschiedliche mittlere Porengröße.
Nach der Herstellung der beiden Schichten werden diese jeweils mit den gleichporösen Schichten aneinander gelegt und mindestens punktuell kraft- und/oder stoffschlüssig miteinander verbunden. Dadurch entsteht eine keramische Flachmembran, die ein Teilelement eines Modules sein kann. Diese Flachmembran wird dann gesintert.
Es ist jedoch erfindungsgemäß auch möglich, daß die beiden Schichten separat gesintert und dann erst miteinander verbunden werden.

Im weiteren wird die Erfindung an mehreren Ausführungsbeispielen näher erläutert.

### Beispiel 1

### Herstellung der Suspension 1

100 g Siliciumcarbidpulver mit einem mittleren Partikeldurchmesser von 45 µm und 15 g Borosilikatglaspulver werden in einer Lösung aus 12,9 g Polyvinylalkohol, 5,3 g Glycerin und 0,5 g Nonanol als Entschäumer in 65 g Wasser dispergiert. Die Dispergierung erfolgt durch 5stündiges Rühren in einem Becherglas mittels Propellerrührer.

### Herstellung der Suspension 2

100 g Siliciumcarbidpulver mit einem mittleren Partikeldurchmesser von 2 µm und 20 g Borosilikatglaspulver werden in einer Lösung aus 15 g Polyvinylalkohol, 6,2 g Glycerin, 0,05 g Natriumpolycarbonat als Dispergiermittel und 0,5 g Nonanol als Entschäumer in 65 g Wasser dispergiert. Die Dispergierung erfolgt durch 6stündiges Rühren in einem Becherglas mittels Propellerrührer.

### Herstellung der Schicht 1

Die Suspension 1 wird auf einer Foliengießanlage zu einer Folie vergossen. Die Gießhöhe über der ebenen Unterlage beträgt 0,8 mm. Nach einer Trocknungszeit von 4 h bei Raumtemperatur wird über diese Folie die Suspension 2 mit einer Gießhöhe von 0,1 mm gegossen. Nach einer Trocknungszeit von 6 h bei Raumtemperatur wird aus zwei Teilschichten/Teilfolien eine Schicht/Folie erhalten, die dann von der Unterlage entfernt wird.

### Herstellung der Schicht 2

Die Herstellung der Schicht 2 erfolgt analog dem Verfahren zur Herstellung der Schicht 1.

Nach dem Vorliegen der beiden Schichten im getrockneten Zustand werden aus der Schicht 1 Quadrate der Abmessungen 100 x 100 mm² geschnitten. Die Schicht 2 wird in Rechtecke der Abmessungen 100 x 134,5 mm² geschnitten. Die Schichtstücke mit den größeren Abmessungen werden mittels Transport durch zwei gegenläufige zylindrische Stempel mit trapezförmig gezähnter Oberflächenstruktur geprägt und erlangen dadurch die Abmessungen 100 x 100 mm². Anschließend werden die beiden Schichten, die eine geprägte und die eine ungeprägte, miteinander verbunden, wobei die aus der Suspension 1 hergestellten Teilschichten einander zugewandt sind.
Durch dieses Verfahren ist eine Flachmembran mit Kanälen entstanden, die einen trapezförmigen Querschnitt aufweisen.
Der Flachmembran-Grünkörper wird bei 950 °C an Luft gesintert, wodurch die Flachmembran ihre endgültigen Eigenschaften erhält.

### Beispiel 2

### Herstellung der Suspension 1

65 g Siliciumcarbidpulver mit einem mittleren Partikeldurchmesser von 20 µm und 11,5 g Borosilikatglaspulver werden in einer Lösung aus 9,8 g Polyvinylalkohol und 9,8 g Polyethylenglykol in 42 g Wasser dispergiert. Die Dispergierung erfolgt durch 5stündiges Rühren in einem Becherglas mittels Propellerrührer. Anschließend wird die Suspension in einer Vakuumbox bei einem Druck von 12 Pa entgast.

### Herstellung der Suspension 2

50 g Siliciumcarbidpulver mit einem mittleren Partikeldurchmesser von 1 µm und 7,2 g Borosilikatglaspulver werden in einer Lösung aus 6,5 g Polyvinylalkohol, 6,5 g Polyethylenglykol und 0,1 g Natriumpolycarbonat als Dispergiermittel in 32 g Wasser dispergiert. Die Dispergierung erfolgt durch gleichmäßiges Bewegen in einem geschlossenen Gefäß auf einem Rollenstuhl. In dem Gefäß befinden sich außer der Suspension 50 Achatkugeln mit einem Durchmesser von 10 mm. Nach der 2stündigen Dispergierung wird die Suspension über ein Sieb abgegossen und danach durch Ultraschallanwendung entgast.

### Herstellung der Schicht 1

Die Suspension 1 wird auf einer Foliengießanlage zu einer Folie vergossen. Die Gießhöhe über der ebenen Unterlage beträgt 0,6 mm. Nach einer Trocknungszeit von 3 h bei Raumtemperatur wird über diese Folie die Suspension 2 mit einer Gießhöhe von 0,09 mm gegossen. Nach einer Trocknungszeit von 6 h bei Raumtemperatur wird die so aus zwei Teilschichten/Teilfolien erhaltene Schicht/Folie von der Unterlage entfernt.

### Herstellung der Schicht 2

Die Herstellung der Schicht 2 erfolgt analog dem Verfahren zur Herstellung der Schicht 1.

Nach dem Vorliegen der beiden Schichten im getrockneten Zustand werden aus beiden Quadrate der Abmessungen 100 x 100 mm² geschnitten. Die Stücke der Schicht 2 werden in eine Form gelegt, die aus einem Rahmen 100 x 100 mm² und aus zwei Preßstempeln mit einer gewellten Oberfläche besteht, und durch Anwendung eines Druckes von 2 MPa verformt. Anschließend werden die beiden Schichten, die eine geprägte und die eine ungeprägte, miteinander verbunden, wobei die aus der Suspension 1 hergestellten Teilschichten einander zugewandt sind.
Durch dieses Verfahren ist eine Flachmembran mit Kanälen entstanden, die einen wellenförmigen Querschnitt aufweisen.
Der Flachmembran-Grünkörper wird bei 950 °C an Luft gesintert, wodurch die Flachmembran ihre endgültigen Eigenschaften erhält.

## Patentansprüche

1. Keramische Flachmembran aus mindestens zwei Schichten gleicher Dicke, die aus mindestens zwei unterschiedlich porösen Teilschichten aufgebaut sind, wobei mindestens eine der Schichten eine nicht planare Geometrie aufweist und diese zwei Schichten mindestens punktuell und stoffschlüssig miteinander verbunden sind und dadurch die Flachmembran Kanäle aufweist, **dadurch gekennzeichnet, dass** die Querschnitte der Kanäle beliebige Geometrien aufweisen und diese Querschnittsgeometrien auch über die Länge der Kanäle und auch über das Volumen der Flachmembran kontinuierlich oder diskontinuierlich verändert vorhanden sind.

2. Keramische Flachmembran nach Anspruch 1, bei der die mittlere Porengröße der Teilschichten in Richtung des Filtrates hin zunimmt.

3. Keramische Flachmembran nach Anspruch 1, bei der die eine der zwei Schichten eine planare und die andere eine gewellte Geometrie aufweist.

4. Keramische Flachmembran nach Anspruch 1, bei der beide Schichten eine gewellte Geometrie aufweisen.

5. Keramische Flachmembran nach Anspruch 1, bei der die Kanäle eine längsorientierte Struktur aufweisen.

6. Keramische Flachmembran nach Anspruch 1, bei der die Querschnitte der Kanäle dreieckig, halbkreisförmig, wellenförmig oder trapezförmig ausgebildet sind.

7. Keramische Flachmembran nach Anspruch 1, bei der die Zahl der längsorientierten Kanäle zwischen 2 und 500 beträgt.

8. Keramische Flachmembran nach Anspruch 1, bei der das Verhältnis der Dicke der grobporöseren Teilschicht zur Dicke der feinporöseren Teilschicht 5 bis 10 beträgt.

9. Keramische Flachmembran nach Anspruch 1, bei der das Verhältnis der Dicke einer feinporöseren Teilschicht zur Dicke einer weiteren noch feinporöseren Teilschicht 1 bis 10 beträgt.

10. Keramische Flachmembran nach Anspruch 1, bei der der mittlere Porendurchmesser der grobporöseren Teilschicht das 2 bis 10fache des mittleren Porendurchmessers der feinporöseren Teilschicht beträgt.

11. Keramische Flachmembran nach Anspruch 1, bei der der mittlere Porendurchmesser einer feinporöseren Teilschicht das 2 bis 100fache des mittleren Porendurchmessers einer weiteren noch feinporöseren Teilschicht beträgt.

12. Keramische Flachmembran nach Anspruch 1, bei der der mittlere Partikeldurchmesser der grobporöseren Teilschicht das 2 bis 10fache des mittleren Partikeldurchmessers der feinporöseren Teilschicht beträgt

13. Keramische Flachmembran nach Anspruch 1, bei der der mittlere Partikeldurchmesser einer feinporöseren Teilschicht das 2 bis 100fache des mittleren Partikeldurchmessers einer weiteren noch feinporöseren Teilschicht beträgt.

14. Keramische Flachmembran nach Anspruch 1, bei der wenigstens eine der Teilschichten eine dichte oder nanoporöse anorganische Schicht aufweist.

15. Keramische Flachmembran nach Anspruch 14, bei der die anorganische Schicht eine metallische und/oder keramische Schicht ist.

16. Keramische Flachmembran nach Anspruch 14, bei der die dichte oder nanoporöse Schicht auf die feinporöseste Teilschicht aufgebracht ist.

17. Keramische Flachmembran nach Anspruch 1, bei der einer oder mehrere oder jeder Kanal eine andere Querschnittsgeometrie aufweist.

18. Keramische Flachmembran nach Anspruch 1, bei der die Kanalquerschnittsgeometrien sich periodisch wiederholen.

19. Keramische Flachmembran nach Anspruch 1, bei der einzelne oder alle Kanäle und/oder die gesamte Flachmembran eine in sich verdrehte Form aufweisen.

20. Keramische Flachmembran nach Anspruch 1, bei der die mindestens zwei Schichten aus mindestens zwei miteinander laminierten Teilschichten bestehen.

21. Verfahren zur Herstellung von keramischen Flachmembranen nach einem der Ansprüche 1 bis 20, **dadurch gekennzeichnet, dass** aus mindestens zwei keramischen Pulvern gleicher oder unterschiedlicher Zusammensetzung aber unterschiedlicher Partikelgröße oder aus mindestens einem keramischen Pulver und mindestens einer Lösung, die die Vorstufen eines keramischen Materials enthält, unter Zusatz bekannter Additive, Sinterhilfsmittel, Formgebungshilfsmittel, Bindemittel, Dispergierhilfsmittel keramische Suspensionen hergestellt werden, wobei die Partikelgröße der Zusätze nicht größer ist als die größte Partikelgröße der keramischen Pulver, aus einer der Suspensionen mindestens eine Teilschicht geformt und dann die Dispersionsflüssigkeit ganz oder teilweise entfernt wird, danach eine zweite Teilschicht aus der anderen Suspension oder Lösung geformt und die Dispersionsflüssigkeit oder das Lösungsmittel ganz oder teilweise entfernt wird, wobei diese mindestens zwei Teilschichten übereinandergelegt und/oder miteinander zu einer Schicht verbunden werden, anschließend mindestens eine derartige Schicht geprägt und gesintert oder ungesintert mindestens punktuell und stoffschlüssig mit einem nichtgeprägten, gleichartig geprägten, andersartig geprägten oder andersartig strukturierten, gesinterten oder ungesinterten Schicht zu einer Flachmembran verbunden wird, wobei mindestens eine der Schichten ungesintert verbunden wird, und wobei Kanäle mit einer beliebig geformten Querschnittsgeometrie hergestellt werden, und anschließend eine Sinterung erfolgt.

22. Verfahren nach Anspruch 21, bei dem als keramische Pulver oxidische oder nichtoxidische Pulver oder Mischungen dieser Pulver eingesetzt werden.

23. Verfahren nach Anspruch 21, bei dem als keramische Pulver Siliciumcarbid oder Aluminiumoxid oder Zirkonoxid eingesetzt werden.

24. Verfahren nach Anspruch 21, bei dem als Dispersionsflüssigkeit Wasser eingesetzt wird.

25. Verfahren nach Anspruch 21, bei dem als Bindemittel ein Gemisch aus mindestens Polyvinylalkohol und mindestens einer thermoplastischen Substanz, wie Stearinsäure, Paraffin, eingesetzt wird.

26. Verfahren nach Anspruch 21, bei dem als Sinteradditiv ein Glas eingesetzt wird.

27. Verfahren nach Anspruch 21, bei dem als Lösung, die die Vorstufen eines keramischen Materials enthält, ein Sol eingesetzt wird.

28. Verfahren nach Anspruch 21, bei dem die Formung der Teilschichten durch Foliengießen erfolgt.

29. Verfahren nach Anspruch 21, bei dem nach dem Gießen einer Folie und der Trocknung dieser Folie auf diese eine weiter Folie gegossen wird.

30. Verfahren nach Anspruch 21, bei dem die Prägung und Formgebung einer Schicht simultan beim Aufbringen dieser Teilschicht auf die zweite Teilschicht durchgeführt wird.

31. Verfahren nach Anspruch 21, bei dem das Verhältnis der Spaltbreite einer schlitzartigen Öffnung für das Gießen einer ersten Folie zur Spaltbreite einer schlitzartigen Öffnung für das Gießen einer zweiten Folie darauf 0,1 bis 0,5 beträgt und dieses Verhältnis auch für das Gießen weiterer Folien gilt.

32. Verfahren nach Anspruch 21, bei dem das Verhältnis des mittleren Partikeldurchmessers einer feinkörnigeren Suspension zum mittleren Partikeldurchmesser einer grobkörnigem Suspension 0,1 bis 0,5 beträgt und dieses Verhältnis auch für weitere Suspensionen gilt.

33. Verfahren nach Anspruch 21, bei dem die Schichtherstellung kontinuierlich aus einem unbeweglichen Behälter auf ein bewegtes Trägerband erfolgt.

34. Verfahren nach Anspruch 21, bei dem die Schichtherstellung diskontinuierlich aus einem beweglichen Behälter auf eine unbewegliche Unterlage erfolgt, wobei die unbewegliche Unterlage eine Platte oder eine auf einer Platte fixierte Trägerfolie ist.

35. Verfahren nach Anspruch 21, bei dem zur Schichtherstellung eine Platte oder ein Trägerband eingesetzt werden, die gewellt, gezackt oder strukturiert sind.

36. Verfahren nach Anspruch 21, bei dem das Prägen kontinuierlich radial durch zylindrische Stempel mit einer gekrümmten Negativkontur erfolgt.

37. Verfahren nach Anspruch 21, bei dem das Prägen diskontinuierlich uniaxial durch flächige Stempel mit einer ebenen Negativkontur erfolgt.

38. Verfahren nach Anspruch 21, bei der jeweils zwei gegenüberliegende strukturierte Stempel mit der Negativkontur der jeweils beiden Flächen der zu prägenden Schichten eingesetzt werden, wobei der Abstand zwischen den Stempeln und der Anpreßdruck variiert werden.

39. Verfahren nach Anspruch 21, bei dem die Schicht(en) vor und/oder während und/oder nach dem Prägen erwärmt oder gekühlt werden.

40. Verfahren nach Anspruch 21, bei dem die Schicht(en) vor und/oder während und/oder nach dem Prägen befeuchtet oder getrocknet werden.

41. Verfahren nach Anspruch 21, bei dem die Herstellung der Flachmembran aus mindestens einer geprägten Schicht und einer nichtgeprägten, gleichartig geprägten, andersartig geprägten oder andersartig strukturierten Schicht diskontinuierlich uniaxial durch zwei flächige Stempel, wobei einer die ebene Negativkontur der Prägestruktur aufweist, erfolgt.

42. Verfahren nach Anspruch 21, bei dem die Herstellung der Flachmembran aus mindestens einer geprägten Schicht und einer nichtgeprägten, gleichartig geprägten, andersartig geprägten oder andersartig strukturierten Schicht kontinuierlich radial durch zwei zylindrische Stempel, wobei jeweils einer die gekrümmte Negativkontur der jeweiligen Prägestruktur aufweist, erfolgt.

43. Verfahren nach Anspruch 21, bei dem zur Herstellung der mindestens punktuell und stoffschlüssigen Verbindung zwischen zwei Schichten jeweils zwei gegenüberliegende Stempel mit der Negativkontur der jeweils beiden Flächen der aus geprägten und ungeprägten Schichten entstandenen Flachmembran eingesetzt werden, wobei der Abstand zwischen den Stempeln und der Anpreßdruck variiert werden.

44. Verfahren nach Anspruch 21, bei dem die geprägten und/oder ungeprägten Schichten vor und/oder während und/oder nach dem Verbinden mit anderen geprägten und/oder ungeprägten Schichten erwärmt oder gekühlt und/oder befeuchtet oder getrocknet wird.

45. Verfahren nach Anspruch 21, bei dem die Prägestempel aus einem Material mit elastischen Eigenschaften besteht.

## Claims

1. Flat ceramic membrane comprising at least two layers of equal thickness composed of at least two differently porous part-layers, at least one of the layers having a nonplanar geometry and these two layers being connected to one another at least punctually and integrally so that the flat membrane has channels, **characterized in that** the cross-sections of the channels have arbitrary geometries and these cross-sectional geometries are also present over the length of the channels and also over the volume of the flat membrane in continuously or discontinuously changed form.

2. Flat ceramic membrane according to Claim 1, wherein the average pore size of the part-layers increases in the direction of the filtrate.

3. Flat ceramic membrane according to Claim 1, wherein one of the two layers has a planar geometry and the other has a waved geometry.

4. Flat ceramic membrane according to Claim 1, wherein both layers have a waved geometry.

5. Flat ceramic membrane according to Claim 1, wherein the channels have a longitudinally oriented structure.

6. Flat ceramic membrane according to Claim 1, wherein the cross-sections of the channels are triangular, semicircular, undulate or trapezoidal.

7. Flat ceramic membrane according to Claim 1, wherein the number of longitudinally oriented channels is between 2 and 500.

8. Flat ceramic membrane according to Claim 1, wherein the ratio of the thickness of the more coarsely pored part-layer to the thickness of the more finely pored part-layer is from 5 to 10.

9. Flat ceramic membrane according to Claim 1, wherein the ratio of the thickness of a relatively finely pored part-layer to the thickness of a further, even more finely pored part-layer is from 1 to 10.

10. Flat ceramic membrane according to Claim 1, wherein the average pore diameter of the more coarsely pored part-layer is from 2 to 10 times the average pore diameter of the more finely pored part-layer.

11. Flat ceramic membrane according to Claim 1, wherein the average pore diameter of a relatively finely pored part-layer is from 2 to 100 times the average pore diameter of a further, even more finely pored part-layer.

12. Flat ceramic membrane according to Claim 1, wherein the average particle diameter of the more coarsely pored part-layer is from 2 to 10 times the average particle diameter of the more finely pored part-layer.

13. Flat ceramic membrane according to Claim 1, wherein the average particle diameter of a relatively finely pored part-layer is from 2 to 100 times the average particle diameter of a further, even more finely pored part-layer.

14. Flat ceramic membrane according to Claim 1, wherein at least one of the part-layers has a dense or nanoporous inorganic layer.

15. Flat ceramic membrane according to Claim 14, wherein the inorganic layer is a metallic and/or ceramic layer.

16. Flat ceramic membrane according to Claim 14, wherein the dense or nanoporous layer is applied to the most finely pored part-layer.

17. Flat ceramic membrane according to Claim 1, wherein one or two or more or every channel has a different cross-sectional geometry.

18. Flat ceramic membrane according to Claim 1, wherein the channel cross-sectional geometries repeat periodically.

19. Flat ceramic membrane according to Claim 1, wherein some or all of the channels and/or the flat membrane as a whole have an inherently twisted shape.

20. Flat ceramic membrane according to Claim 1, wherein the at least two layers are composed of at least two part-layers laminated to one another.

21. Process for producing flat ceramic membranes according to any of Claims 1 to 20, **characterized in that** ceramic suspensions are prepared from at least two ceramic powders of the same or different composition but different particle size or from at least one ceramic powder and at least one solution comprising the precursors of a ceramic material, with the addition of known additives, sintering agents, shaping agents, binders and/or dispersing agents, the particle size of the additions being not greater than the greatest particle size of the ceramic powders, at least one part-layer is formed from one of the suspensions and then the dispersion liquid is entirely or partially removed, after which a second part-layer is formed from the other suspension or solution and the dispersion liquid or the solvent is entirely or partially removed, these at least two part-layers being placed one above another and/or connected to one another to form a layer, and subsequently at least one such layer is embossed and, in sintered or unsintered form, is connected at least punctually and integrally to an unembossed, identically embossed, differently embossed or differently structured, sintered or unsintered layer to form a flat membrane, at least one of the layers being connected in unsintered form, with channels having a cross-sectional geometry of arbitrary shape being produced, and subsequently a sintering operation takes place.

22. Process according to Claim 21, wherein use is made as ceramic powders of oxidic or non-oxidic powders or mixtures of these powders.

23. Process according to Claim 21, wherein use is made as ceramic powders of silicon carbide or aluminium oxide or zirconium oxide.

24. Process according to Claim 21, wherein water is used as dispersion liquid.

25. Process according to Claim 21, wherein use is made as binder of a mixture of at least polyvinyl alcohol and at least one thermoplastic substance, such as stearic acid or paraffin.

26. Process according to Claim 21, wherein a glass is used as sintering additive.

27. Process according to Claim 21, wherein a sol is used as solution which comprises the precursors of a ceramic material.

28. Process according to Claim 21, wherein the forming of the part-layers takes place by film casting.

29. Process according to Claim 21, wherein after the casting of the film and the drying of that film a further film is cast thereon.

30. Process according to Claim 21, wherein the embossing and shaping of a layer are performed simultaneously with the application of that part-layer to the second part-layer.

31. Process according to Claim 21, wherein the ratio of the gap width of a slotlike opening for the casting of the first film to the gap width of a slotlike opening for the casting of a second film thereon is from 0.1 to 0.5 and this ratio also holds for the casting of further films.

32. Process according to Claim 21, wherein the ratio of the average particle diameter of a relatively finely grained suspension to the average particle diameter of a more coarsely grained suspension is from 0.1 to 0.5 and this ratio also holds for further suspensions.

33. Process according to Claim 21, wherein layer production takes place continuously from a stationary container onto a moving carrier belt.

34. Process according to Claim 21, wherein layer production takes place discontinuously from a movable container onto a stationary substrate, the stationary substrate being a plate or a carrier film fixed to a plate.

35. Process according to Claim 21, wherein layer production is carried out using a plate or a carrier belt which is waved, serrated or structured.

36. Process according to Claim 21, wherein embossing takes place continuously in a radial fashion by means of cylindrical dies with a curved negative contour.

37. Process according to Claim 21, wherein embossing takes place discontinuously in a uniaxial fashion by means of flat dies with a planar negative contour.

38. Process according to Claim 21, wherein use is made of pairs of opposing structured dies having the negative contour of each of the two faces of the layers to be embossed, with the distance between the dies and the contact pressure being varied.

39. Process according to Claim 21, wherein the layer(s) are heated or cooled before and/or during and/or after embossing.

40. Process according to Claim 21, wherein the layer(s) are moistened or dried before and/or during and/or after embossing.

41. Process according to Claim 21, wherein production of the flat membrane from at least one embossed layer and one unembossed, identically embossed, differently embossed or differently structured layer takes place discontinuously in a uniaxial fashion by means of two flat dies, with one having the planar negative contour of the embossing structure.

42. Process according to Claim 21, wherein production of the flat membrane from at least one embossed layer and one unembossed, identically embossed, differently embossed or differently structured layer takes place continuously in a radial manner by means of two cylindrical dies, with in each case one having the curved negative contour of the respective embossing structure.

43. Process according to Claim 21, wherein to produce the at least punctual and integral connection between two layers use is made of pairs of opposing dies with the negative contour of each of the two faces of the flat membrane formed from embossed and unembossed layers, with the distance between the dies and the contact pressure being varied.

44. Process according to Claim 21, wherein the embossed and/or unembossed layers are heated or cooled and/or moistened or dried before and/or during and/or after connection to other embossed and/or unembossed layers.

45. Process according to Claim 21, wherein the embossing die is composed of a material having elastic properties.

## Revendications

1. Membrane plane céramique constituée d'au moins deux couches de même épaisseur qui sont structurées en au moins deux différentes couches partielles poreuses, au moins l'une des couches présentant une géométrie non plane et ces deux couches étant reliées l'une à l'autre au moins ponctuellement et en correspondance de matière, la membrane plane présentant ainsi des canaux, **caractérisée en ce que** la section transversale des canaux présente des géométries quelconques, ces géométries de la section transversale se modifiant de manière continue ou discontinue suivant la longueur des canaux et également dans le volume de la membrane plane.

2. Membrane plane céramique selon la revendication 1, dans laquelle la taille moyenne des pores des couches partielles augmente en direction du filtrat.

3. Membrane plane céramique selon la revendication 1, dans laquelle l'une des deux couches présente une géométrie plane et l'autre une géométrie ondulée.

4. Membrane plane céramique selon la revendication 1, dans laquelle les deux couches présentent une géométrie ondulée.

5. Membrane plane céramique selon la revendication 1, dans laquelle les canaux présentent une structure orientée suivant leur longueur.

6. Membrane plane céramique selon la revendication 1, dans laquelle les sections transversales des canaux présentent une forme triangulaire, semi-circulaire, ondulée ou trapézoïdale.

7. Membrane plane céramique selon la revendication 1, dans laquelle le nombre des canaux orientés longitudinalement est compris entre 2 et 500.

8. Membrane plane céramique selon la revendication 1, dans laquelle le rapport entre l'épaisseur de la couche partielle à porosité grossière et l'épaisseur de la couche partielle à porosité fine est compris entre 5 et 10.

9. Membrane plane céramique selon la revendication 1, dans laquelle le rapport entre l'épaisseur d'une couche partielle à porosité fine et l'épaisseur d'une autre couche partielle à porosité encore plus fine est compris entre 1 et 10.

10. Membrane plane céramique selon la revendication 1, dans laquelle le diamètre moyen des pores de la couche partielle à porosité grossière représente de 2 à 10 fois le diamètre moyen des pores de la couche partielle à porosité fine.

11. Membrane céramique plane selon la revendication 1, dans laquelle le diamètre moyen des pores d'une couche partielle à porosité fine représente de 2 à 100 fois le diamètre moyen des pores d'une autre couche partielle à porosité encore plus fine.

12. Membrane plane céramique selon la revendication 1, dans laquelle le diamètre moyen des particules de la couche partielle à porosité grossière représente de 2 à 10 fois le diamètre moyen des particules de la couche partielle à porosité fine.

13. Membrane plane céramique selon la revendication 1, dans laquelle le diamètre moyen des particules d'une couche partielle à porosité fine représente de 2 à 100 fois le diamètre moyen des particules d'une autre couche partielle à porosité encore plus fine.

14. Membrane plane céramique selon la revendication 1, dans laquelle au moins l'une des couches partielles présente une couche minérale étanche ou nano-poreuse.

15. Membrane plane céramique selon la revendication 14, dans laquelle la couche minérale est une couche métallique et/ou céramique.

16. Membrane plane céramique selon la revendication 14, dans laquelle la couche étanche ou nano-poreuse est appliquée sur la couche partielle à porosité la plus fine.

17. Membrane plane céramique selon la revendication 1, dans laquelle un ou plusieurs des canaux, ou chaque canal, présentent une géométrie de section transversale différente.

18. Membrane plane céramique selon la revendication 1, dans laquelle les géométries de la section transversale des canaux se répètent périodiquement.

19. Membrane plane céramique selon la revendication 1, dans laquelle certains ou tous les canaux et/ou la totalité de la membrane plane présentent une forme torsadée.

20. Membrane plane céramique selon la revendication 1, dans laquelle les au moins deux couches sont constituées d'au moins deux couches partielles stratifiées l'une sur l'autre.

21. Procédé pour la fabrication de membranes planes céramiques selon l'une des revendications 1 à 20, **caractérisé en ce que** des suspensions céramiques sont préparées à partir d'au moins deux poudres céramiques de même composition ou de compositions différentes mais qui présentent des particules de tailles différentes, ou d'au moins une poudre céramique et d'au moins une solution qui contient les précurseurs d'un matériau céramique, avec addition d'additifs, d'agents auxiliaires de frittage, d'agents auxiliaires de façonnage, de liants, d'agents auxiliaires de dispersion connus, la taille des particules des additifs n'étant pas plus grande que la taille des plus grandes particules de la poudre céramique, **en ce qu'**au moins une couche partielle est formée à partir de l'une des suspensions, le liquide de dispersion étant ensuite entièrement ou partiellement enlevé, **en ce qu'**une deuxième couche partielle est ensuite formée à partir de l'autre suspension ou solution, le liquide de dispersion ou le solvant étant totalement ou partiellement enlevé, **en ce que** ces deux couches partielles au moins présentes sont superposées et/ou reliées l'une à l'autre pour former une couche, au moins une telle couche étant ensuite matricée et frittée ou étant, sans être frittée, reliée au moins ponctuellement et en correspondance de matière à une couche frittée ou non frittée, non matricée, matricée de même manière, matricée d'une autre manière ou structurée d'une autre manière, pour former une membrane plane, au moins l'une des couches étant reliée sans être frittée, des canaux qui présentent une section transversale de géométrie quelconque étant réalisés avant d'exécuter un frittage.

22. Procédé selon la revendication 21, dans lequel on utilise comme poudres céramiques des poudres oxydées ou non oxydées ou des mélanges de ces poudres.

23. Procédé selon la revendication 21, dans lequel on utilise comme poudres céramiques du carbure de silicium, de l'oxyde d'aluminium ou de l'oxyde de zirconium.

24. Procédé selon la revendication 21, dans lequel on utilise de l'eau comme liquide de dispersion.

25. Procédé selon la revendication 21, dans lequel on utilise comme liant un mélange d'au moins un alcool polyvinylique et d'au moins une substance thermoplastique, par exemple l'acide stéarique ou la paraffine.

26. Procédé selon la revendication 21, dans lequel on utilise un verre comme additif de frittage.

27. Procédé selon la revendication 21, dans lequel on utilise un sol comme solution qui contient les précurseurs d'un matériau céramique.

28. Procédé selon la revendication 21, dans lequel le façonnage des couches partielles s'effectue par coulée en feuille.

29. Procédé selon la revendication 21, dans lequel après la coulée d'une feuille et le séchage de cette feuille, on coule sur elle une autre feuille.

30. Procédé selon la revendication 21, dans lequel le matriçage et le façonnage d'une couche sont exécutés en même temps que l'application de cette couche partielle sur la deuxième couche partielle.

31. Procédé selon la revendication 21, dans lequel le rapport entre la largeur de l'interstice d'une ouverture en forme de fente prévue pour la coulée d'une première feuille et la largeur de l'interstice d'une ouverture en forme de fente prévue pour la coulée d'une deuxième feuille sur la première étant compris entre 0,1 et 0,5, ce rapport restant valide pour la coulée d'autres feuilles.

32. Procédé selon la revendication 21, dans lequel le rapport entre le diamètre moyen des particules d'une suspension à grains fins et le diamètre moyen des particules d'une suspension à grains grossiers est compris entre 0,1 et 0,5, ce rapport restant valide pour d'autres suspensions.

33. Procédé selon la revendication 21, dans lequel la réalisation des couches s'effectue en continu sur une bande de support mobile depuis un récipient immobile.

34. Procédé selon la revendication 21, dans lequel la réalisation des couches s'effectue de manière discontinue sur un support immobile depuis un récipient mobile, le support immobile étant une plaque ou une feuille de support fixée sur une plaque.

35. Procédé selon la revendication 21, dans lequel pour la réalisation des couches, on utilise une plaque ou une bande de support qui sont ondulées, crantées ou structurées.

36. Procédé selon la revendication 21, dans lequel le matriçage s'effectue de manière continue et radialement par des tampons cylindriques qui présentent un contour négatif courbé.

37. Procédé selon la revendication 21, dans lequel le matriçage s'effectue de manière discontinue et uniaxiale par des tampons plats qui présentent un contour négatif plan.

38. Procédé selon la revendication 21, dans lequel on utilise deux tampons structurés opposés qui présentent un contour négatif de chacune des deux surfaces des couches à matricer, la pression de matriçage et la distance entre les tampons étant variables.

39. Procédé selon la revendication 21, dans lequel la ou les couches sont réchauffées ou refroidies avant et/ou pendant et/ou après le matriçage.

40. Procédé selon la revendication 21, dans lequel la ou les couches sont humidifiées ou séchées avant et/ou pendant et/ou après le matriçage.

41. Procédé selon la revendication 21, dans lequel la réalisation de la membrane plane s'effectue à partir d'au moins une couche matricée et d'une couche non matricée, matricée de même manière, matricée d'une autre manière ou structurée d'une autre manière, de manière discontinue et uniaxiale, par deux tampons plats dont l'un présente le contour négatif plan de la structure de matriçage.

42. Procédé selon la revendication 21, dans lequel la réalisation de la membrane plane s'effectue à partir d'au moins une couche matricée et d'une couche non matricée, matricée de la même manière, matricée différemment ou structurée différemment, de manière continue et radialement par deux tampons cylindriques dont l'un présente le contour négatif courbé de la structure matriçage respective.

43. Procédé selon la revendication 21, dans lequel pour réaliser la liaison au moins ponctuelle et en correspondance de matière entre deux couches, on utilise deux tampons opposés respectifs qui présentent le contour négatif de chacune des deux surfaces de la membrane plane obtenue à partir de couches matricées et de couches non matricées, la pression de matriçage et la distance entre les tampons étant variables.

44. Procédé selon la revendication 21, dans lequel les couches matricées et/ou non matricées sont réchauffées ou refroidies et/ou humidifiées ou séchées avant et/ou pendant et/ou après la liaison à d'autres couches matricées et/ou non matricées.

45. Procédé selon la revendication 21, dans lequel le tampon de matriçage est constitué d'un matériau qui présente des propriétés élastiques.
